# FASCICULE DE BREVET EUROPEEN

(11) **EP 0 677 404 B1**
(45) Date de publication et mention de la délivrance du brevet: **02.07.1997**
(21) Numéro de dépôt: 95200863.9
(22) Date de dépôt: 05.04.1995
(51) Int. Cl.: B60B 35/18, F16C 33/20, F16C 17/02

(54) **Essieu d'entraînement et de réglage en hauteur des roues motrices d'une machine autotractée à paliers démontables et machine équipée de cet essieu**
Antriebsachse für Höheneinstellung der Antriebsräder einer selbstangetriebenen Maschine mit demontierbaren Lagern und Maschine mit solcher Achse
Drive axle for adjusting the height of the drive wheels of a self driven machine with demountable bearings and machine provided with such an axle

(30) Priorité: 12.04.1994 FR 9404744
(43) Date de publication de la demande: 18.10.1995
(73) Titulaire: GRANJA, Société Anonyme, F-31270 Cugnaux (FR)
(72) Inventeur: Eymard, Bruno, F-31130 Balma (FR)
(74) Mandataire: Cabinet BARRE LAFORGUE & associés

(56) Documents cités:
- EP-A- 0 475 072
- CH-A- 339 437
- FR-A- 2 455 207
- US-A- 4 785 612
- US-A- 4 896 487

## Description

L'invention concerne un essieu d'entraînement et de réglage en hauteur des roues motrices d'une machine roulante autotractée à conducteur marchant, c'est-à-dire du type tenue et guidée à la main par l'utilisateur qui marche en la manoeuvrant. Parmi ces machines roulantes autotractées, on peut citer les tondeuses à gazon, les faucheuses, les débroussailleuses...

Ces machines autotractées comportent en général un essieu moteur comprenant un arbre moteur entraîné en rotation et portant deux roues motrices. Les roues motrices sont par ailleurs réglables en hauteur par rapport au carter de la machine pour permettre le réglage d'une hauteur de coupe. Pour ce faire, un palier est porté par une paroi latérale du carter de la machine, et ce palier est traversé par l'arbre moteur qu'il supporte. Un flasque de support de la roue est porté par le palier à l'extérieur du carter. Ce flasque porte l'axe de rotation de la roue. L'extrémité libre de l'arbre moteur s'étendant hors du palier est accouplée en rotation à un pignon d'entraînement qui vient s'engager dans une couronne dentée solidaire de la roue pour l'entraîner en rotation. Une poignée de manoeuvre montée solidaire du flasque de support permet de régler sa position par rapport à la paroi de carter en le faisant tourner autour de l'axe de l'arbre moteur. L'axe de rotation de la roue étant décentré par rapport à l'axe de l'arbre moteur, on modifie ainsi la position en hauteur de la roue par rapport au carter.

Dans les machines autotractées connues, le palier qui supporte l'arbre moteur et le flasque est généralement constitué d'une pièce métallique décolletée soudée au flasque, et supportant un roulement à billes pour le guidage de l'arbre moteur. En effet, on a considéré jusqu'à maintenant que ce palier soumis à de fortes contraintes doit incorporer un roulement à billes et être monté avec la plus grande précision par rapport, d'une part au carter, et d'autre part au flasque de support.

Néanmoins, malgré ces précautions, l'essieu d'une telle machine, soumis à des conditions d'utilisation sévères, subit diverses dégradations et usures. En particulier, chaque pignon d'extrémité d'entraînement des roues est monté sur l'arbre moteur par l'intermédiaire d'une roue libre particulièrement fragile. Lorsque cette roue libre se détériore, elle engendre un matage de l'arbre moteur, ce qui nécessite le changement de l'arbre moteur. Or, avec les machines connues sus-mentionnées, le changement de l'arbre moteur ne peut se faire qu'en changeant l'intégralité de l'essieu, à savoir l'arbre moteur, les deux paliers avec leurs roulements à bille, et les deux flasques de support généralement reliés par une barre de liaison parallèle à l'arbre moteur pour une commande commune du réglage en hauteur. Par ailleurs, les paliers des machines connues, formés de pièces décolletées incorporant un roulement à billes, ont un prix de revient relativement élevé comparé au prix de revient des autres éléments constitutifs d'une telle machine destinée au grand public.

Ainsi, le brevet US-A-4 785 612 décrit une tondeuse dont l'arbre moteur est monté rotatif par rapport au support de roue grâce à un premier roulement fixé interposé entre l'arbre et un tube externe auquel le support est fixé. Le tube externe est monté par rapport au carter grâce a un deuxième palier fixe permettant le réglage des roues en hauteur. Ce montage est complexe, coûteux et indémontable.

L'invention vise à pallier ces inconvénients en proposant un essieu d'entraînement et de réglage en hauteur des roues motrices d une machine roulante autotractée à conducteur marchant, dans lequel l'arbre moteur et ses paliers peuvent être démontés de l'essieu aisément en vue de leur remplacement.

L'invention vise également à proposer un tel essieu dont le prix de revient est plus faible que celui des essieux connus dont les paliers sont constitués de pièces décolletées à roulement à billes.

L'invention vise également à proposer un tel essieu qui présente des caractéristiques mécaniques satisfaisantes, notamment en fiabilité, longévité, rigidité. En particulier, l'invention vise à proposer un tel essieu dont les paliers ne comportent pas de roulement à billes mais qui présentent néanmoins une longévité et une résistance équivalentes.

Pour ce faire, l'invention concerne un essieu d'entraînement et de réglage en hauteur des roues motrices d'une machine roulante autotractée à conducteur marchant, telle qu'une tondeuse à gazon, comprenant un arbre moteur entraîné en rotation et, pour le montage de chaque roue motrice, un palier porté par une paroi latérale de carter de la machine et traversé par l'arbre moteur qu'il supporte, un flasque de support de la roue porté par le palier et portant un axe sur lequel la roue est montée librement rotative, l'extrémité libre de l'arbre moteur s'étendant hors du palier pour être accouplée en rotation à un pignon d'entraînement de la roue, caractérisé en ce que le flasque de support comporte une lumière traversante pour recevoir le palier, en ce que la section droite transversale du palier dans sa portion s'étendant entre la lumière du flasque de support et son extrémité libre engagée à l'intérieur de la paroi du carter a des dimensions hors tout perpendiculairement à l'axe du palier qui sont inférieures ou égales à celles de la section droite transversale de la lumière du flasque de support et en ce que le flasque de support est monté sur le palier par des moyens d'association adaptés pour permettre le démontage ultérieur du palier -notamment sans soudure-, de sorte que le palier peut être monté en l'introduisant -notamment depuis l'extérieur- à travers la lumière du flasque de support ou démonté -notamment depuis l'extérieur- par extraction axiale hors de la lumière du flasque de support.

L'invention concerne en outre un essieu d'entraînement et de réglage en hauteur des roues motrices d'une machine roulante autotractée à conducteur marchant, telle qu'une tondeuse à gazon, comprenant un arbre moteur entraîné en rotation, et pour le montage de chaque roue motrice, un palier de guidage de l'arbre moteur. Selon l'invention, le palier de guidage est en forme générale de manchon monté fixe par rapport à une paroi du carter et définit une portée interne globalement cylindrique de révolution de guidage et de support de l'arbre moteur rotatif qui traverse le palier, et une portée externe cylindrique de révolution de guidage et de support d'un flasque de support de la roue motrice qui est ainsi porté par le palier. Le palier selon l'invention présente donc une double fonction de guidage et de support en rotation, d'une part de l'arbre moteur, d'autre part du flasque de support. En outre, le palier selon l'invention forme une butée de blocage axial de l'arbre moteur empêchant le coulissement axial de l'arbre moteur vers l'intérieur du carter de la machine. Il présente donc aussi une troisième fonction de blocage en translation axiale de l'arbre moteur.

Selon l'invention, le palier est un palier lisse et ne comporte donc pas de roulement à billes. Selon l'invention, le palier est formé de deux demi-paliers se joignant par un plan de joint axial et les deux demi-paliers sont associés l'un à l'autre autour de l'arbre moteur par au moins un téton solidaire d'un demi-palier engagé dans un évidement complémentaire de l'autre demi-palier. Avantageusement et selon l'invention, les deux demi-paliers sont identiques et comportent d'un côté de l'axe une série de tétons et de l'autre côté de l'axe une série d'évidements complémentaires. Par ailleurs, selon l'invention, le palier comporte des pièges à graisse constitués de renfoncements ménagés dans sa surface interne au contact de l'arbre moteur. Ces pièges à graisse sont prévus sur la surface interne cylindrique de chaque demi-palier et peuvent être remplis avant le montage des deux demi-paliers l'un sur l'autre. Un palier selon l'invention est donc autolubrifié. Selon l'invention, ce palier peut être constitué d'une matière synthétique dure et rigide, notamment en ABS ou, si nécessaire, en bronze ou en matériau équivalent.

Les moyens d'association du palier sur le flasque sont adaptés pour permettre le montage et le démontage du palier en atelier de façon simple et rapide. Selon l'invention, la lumière traversante du flasque de support est une lumière emboutie axialement à travers le flasque de support vers l'intérieur du carter. Egalement, la surface externe du palier définit une portée introduite dans cette lumière qui est aussi cylindrique, les dimensions radiales de la lumière étant similaires de celles de la portée pour permettre un guidage en rotation du flasque de support par rapport au palier permettant le réglage en hauteur des roues.

L'invention concerne en outre une machine roulante autotractée à conducteur marchant -notamment une tondeuse à gazon- comprenant au moins un essieu selon l'invention.

L'invention concerne aussi un essieu comprenant en combinaison tout ou partie des caractéristiques mentionnées ci-dessus ou ci-après.

D'autres caractéristiques et avantages de l'invention apparaîtront à la lecture de la description suivante qui se réfère aux figures annexées dans lesquelles :

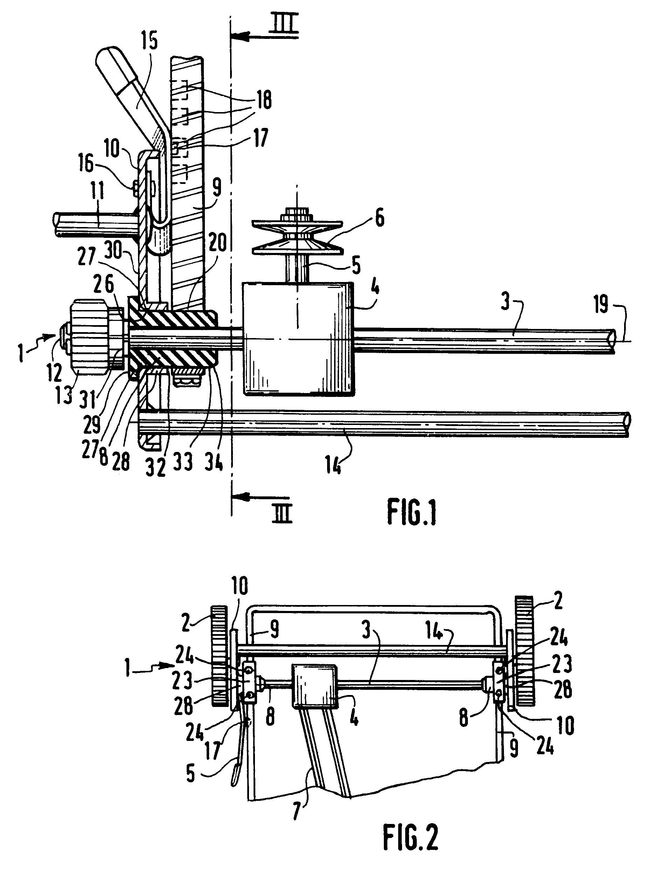

- la figure 1 est une vue schématique partielle en coupe axiale d'un essieu selon l'invention,
- la figure 2 est une vue schématique partielle de dessous d'une machine selon l'invention équipée d'un essieu moteur selon l'invention,
- la figure 3 est une vue en coupe selon la ligne III-III de la figure 1,
- la figure 4 est une vue en perspective d'un demi-palier d'un essieu selon l'invention,
- la figure 5 est une vue axiale schématique illustrant le montage de deux demi-paliers l'un sur l'autre pour former un palier d'un essieu selon l'invention.

L'essieu 1 moteur d'entraînement et de réglage en hauteur des roues motrices 2 d'une machine roulante autotractée, comprend un arbre moteur 3 entraîné en rotation et accouplé aux roues motrices 2. L'arbre moteur 3 est entraîné par un réducteur 4 porté par l'arbre moteur 3 qui constitue l'arbre de sortie de ce réducteur 4. Le réducteur 4 reçoit le mouvement moteur sur son arbre d'entrée 5 par une poulie 6 recevant une courroie 7 reliée par ailleurs à un groupe motopropulseur (non représenté) généralement constitué d'un moteur thermique ou électrique de la machine.

Pour le montage de chaque roue motrice 2, et de l'arbre moteur 3 de chaque côté du carter, l'essieu 1 comporte un palier 8 porté par une paroi latérale 9 verticale du carter de la machine. Le palier 8 est traversé par l'arbre moteur 3 et supporte cet arbre moteur 3 par rapport à la paroi 9 du carter. L'essieu 1 comporte également un flasque 10 de support de la roue 2. Ce flasque 10 est porté par le palier 8 à l'extérieur et en regard de la paroi 9 latérale du carter, et porte lui-même un axe 11 horizontal s'étendant vers l'extérieur et sur lequel la roue 2 est montée librement rotative. L'extrémité libre 12 de l'arbre moteur 3 qui s'étend en dehors du palier 8 est accouplée en rotation à un pignon 13 d'entraînement de la roue 2. Ce pignon 13 est avantageusement monté sur l'arbre moteur 3 par l'intermédiaire d'un dispositif de liaison unidirectionnelle tel qu'une roue libre. Le pignon 13 à denture extérieure coopère avec une couronne solidaire de la roue 2 de façon connue en soi.

Dans le mode de réalisation représenté sur les figures, l'essieu 1 comporte une barre de liaison 14 rigide horizontale, parallèle à l'arbre moteur 3 et reliant les deux flasques 10 de support des deux roues 2. De la sorte, les deux roues 2 du même essieu 1 peuvent être réglées en hauteur par rapport au carter grâce à un dispositif de manoeuvre 15 unique de réglage en hauteur, porté par l'un des flasques 10. Ce dispositif 15 est constitué d'une barrette élastique en flexion fixée à une de ses extrémités au flasque 10 par un boulon 16, et portant une saillie 17 apte à être introduite dans un des évidements 18 ménagés dans la paroi 9 latérale. Selon l'évidement 18 dans lequel on place la saillie 17 en agissant sur la barrette 15, la position du flasque 10 en rotation par rapport à la paroi 9 peut être modifiée. L'axe 11 de rotation de la roue 2 étant décentré par rapport à l'axe 19 de l'arbre moteur 3, autour duquel le flasque 10 peut tourner, la hauteur de la roue 2 est modifiée par rapport au carter de la machine grâce à la barrette 15. La barre de liaison 14 assure que les deux flasques 10 tournent en parallèle, de sorte que la barrette 15 permet de régler simultanément la hauteur des deux roues 2 d'un même essieu.

Le flasque 10 comporte une lumière 27 traversante pour recevoir le palier 8. Le flasque 10 est monté sur le palier 8 par des moyens d'association adaptés pour permettre son démontage ultérieur. En particulier, le palier 8 n'est pas soudé au flasque 10. Le flasque 10 est donc monté sur le palier 8 par des moyens permettant le montage et le démontage du palier 8 en atelier. Selon l'invention, la section droite transversale du palier 8 dans sa portion s'étendant entre la lumière 27 du flasque 10 de support et l'extrémité libre 33 du palier 8 s'étendant à l'intérieur de la paroi 5 du carter a des dimensions hors tout perpendiculairement à l'axe 19 du palier qui sont inférieures ou égales à celles de la section droite transversale de la lumière 27 du flasque 10 de support. Ainsi, ce palier 8 peut être monté en l'introduisant depuis l'extérieur du carter à travers le flasque 10 et la paroi 9 du carter, ou démonté depuis l'extérieur du carter par extraction axiale hors de la paroi 9 du carter et du flasque 10.

Dans le mode de réalisation représenté sur les figures, les dimensions hors tout du palier 8 perpendiculairement à son axe 19 sont constantes le long de la portion du palier 8 introduite à travers le flasque 10 et la paroi 9 du carter. Le palier 8 est constitué d'un canon 20 introduit à travers le flasque 10 et la paroi 9 du carter et formant une portée externe 21 pouvant être serrée dans un évidement 22 de forme complémentaire ménagé en échancrure dans la paroi 9 du carter. La portée externe 21 du palier 8 est maintenue et serrée dans cet évidement 22 grâce à une plaque 23 refermant l'évidement 22 et fixée sous la paroi 9 du carter grâce à deux vis 24 engagées dans des taraudages borgnes 25 à axe vertical de la paroi 9. La plaque 23 est serrée contre la portée externe 21 du palier 8 de façon à maintenir ce palier 8 sans jeu dans l'évidement 22 de la paroi 9, et à bloquer en rotation le palier 8 par rapport à la paroi 9. La portée externe 21 du palier 8 est cylindrique de révolution et l'évidement 22 est en forme d'échancrure hémicylindrique permettant le montage et le démontage du palier 8 dans et hors de cet évidement 22 lorsque la plaque 23 est enlevée. En variante non représentée, la portée 21 du palier 8 et l'évidement 22 pourraient ne pas être cylindriques et être de section droite polygonale et/ou cannelée afin d'améliorer le blocage en rotation du palier 8 par rapport à la paroi 9.

Le canon 20 du palier 8 définit par ailleurs une portée 26, cylindrique de révolution autour de l'axe 19, et qui est engagée dans la lumière 27 traversante cylindrique de révolution du flasque 10. Dans le mode de réalisation représenté, cette portée 26 est une portée cylindrique de la surface externe du canon 20 qui est de même diamètre et en prolongement de la portée cylindrique externe 21 engagée dans l'évidement 22 de la paroi 9. Ainsi, le canon 20 a une surface externe continûment cylindrique de révolution entre la lumière 27 du flasque 10 et l'extrémité libre 33 du palier 8. Les dimensions hors tout du palier 8 sont donc constantes entre la lumière 27 du flasque 10 et l'extrémité libre 33 du palier 8. En variante non représentée, la portée 26 supportant le flasque 10 et la lumière 27 du flasque 10 pourraient être d'un diamètre supérieur à la portée 21 engagée dans l'évidement 22 de la paroi 9 du carter. Les dimensions hors tout du palier 8 seraient alors décroissantes entre la portée 26 et l'extrémité libre 33.

La lumière 27 traversante cylindrique est emboutie axialement à travers le flasque 10 vers l'intérieur du carter pour recevoir le palier 8. Ainsi, la lumière 27 est constituée de l'évidement central d'une jupe 28 cylindrique obtenue par emboutissage dans et à travers le flasque 10 et s'étendant axialement vers l'intérieur du carter, c'est-à-dire vers la paroi 9. Cette jupe 28 a sa surface interne cylindrique de révolution qui vient au contact de la portée cylindrique 26 du palier 8 pour la guider en rotation. La portée 26 du palier 8 est introduite dans la lumière 27, les dimensions radiales de cette lumière 27 étant similaires de celles de la portée 26 pour permettre un guidage en rotation du flasque 10 par rapport au palier 8. Ainsi, la jupe 28 formant la lumière 27 (et donc le flasque 10) est adaptée pour tourillonner autour de la portée cylindrique externe 26 du palier 8 lorsqu'on déverrouille le dispositif 15 de manoeuvre. De la sorte, en agissant sur le dispositif 15 de manoeuvre, on fait tourner le flasque 10 autour du palier 8, ce qui permet le réglage en hauteur des roues 2. Il est à noter que la surface interne cylindrique de la jupe 28 joue le rôle d'un palier lisse guidant la rotation du flasque 10 autour du palier 8. Par ailleurs, ce montage rotatif du flasque 10 par rapport au palier 8 permet le montage et le démontage aisés en atelier du palier 8 par rapport au flasque 10. Selon l'invention, le palier 8 est en matière synthétique et le flasque 10 de support est en alliage métallique. Ainsi, la portée cylindrique 26 du palier 8 peut présenter un diamètre légèrement supérieur au diamètre interne de la lumière 27. Le palier 8 est alors engagé à force dans la lumière 27 avec une certaine déformation radiale élastique. Cette déformation ne bloque cependant pas la jupe 28 (et le flasque 10) en rotation autour du palier 8, de sorte que le réglage des roues 2 en hauteur reste possible. Par ailleurs, il est à noter que ce palier 8 en matière synthétique amortit au moins en partie les chocs entre la roue 2 montée sur le flasque 10 et l'arbre 3.

Le palier 8 est donc constitué de ce canon 20, et d'un collet extérieur 29 venant en butée contre la face extérieure 30 du flasque 10 afin de bloquer axialement le palier 8 vers l'intérieur du carter par rapport au flasque 10 et à la paroi 9 du carter.

Par ailleurs, un anneau amovible 31 élastique de blocage axial est engagé dans une rainure périphérique 32 de l'arbre moteur 3, immédiatement à l'extérieur du collet 29 du palier 8. Cet anneau amovible 31 ou circlips (marque déposée) vient en butée contre le collet 29 du palier 8 et empêche donc le coulissement axial de l'arbre 3 vers l'intérieur du carter. Les deux anneaux 31 de blocage prévus à chaque extrémité de l'arbre 3 et venant en butée contre chacun des deux paliers 8 de montage de chacune des deux roues 2 motrices, réalisent un blocage axial dans les deux directions de l'arbre moteur 3 par rapport aux flasques 10 et aux parois latérales 9 du carter. Les anneaux 31 pourraient être remplacés par d'autres moyens de blocage axial équivalents tels que des goupilles ou autres. Par ailleurs, l'extrémité 32 de la jupe 28 du flasque 10 orientée vers l'intérieur vient buter contre la face extérieure de la paroi 9. Une rondelle peut être prévue entre cette extrémité 32 et la face extérieure de la paroi 9.

L'extrémité libre 33 de la surface externe du canon 20, à l'opposé du collet 29, comporte un chanfrein 34 facilitant l'introduction du canon 20 à travers la lumière 27 du flasque 10. Par ailleurs, l'extrémité libre 35 de la surface interne 36 du palier 8, opposée au collet 29, c'est-à-dire orientée vers l'intérieur du carter, comporte également un chanfrein 37 facilitant l'introduction de l'extrémité 12 de l'arbre moteur 3 dans le palier 8.

Le palier 8 est un palier lisse sans roulement à billes définissant donc une surface interne 36 cylindrique de révolution de contact avec l'arbre moteur 3.

Ainsi, le palier 8 est en forme générale de manchon et est monté fixe par rapport à une paroi 9 du carter, et définit une portée interne 36 globalement cylindrique de révolution de guidage et de support de l'arbre moteur rotatif 3, et une portée externe 26 cylindrique de révolution de guidage et de support du flasque 10 de support de la roue 2 motrice correspondante. Le flasque 10 de support est donc guidé et porté par le palier 8. Il en va de même de l'arbre moteur 3.

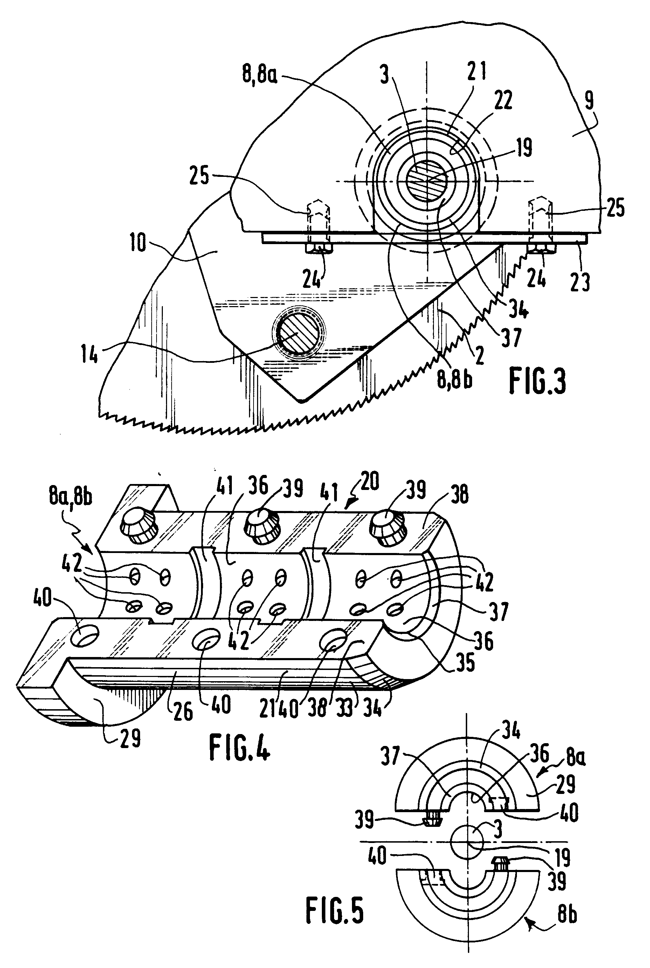

Dans le mode de réalisation représenté sur les figures 4 et 5, le palier 8 est constitué d'une matière synthétique dure et rigide -notamment en ABS-, et est formé de deux demi-paliers 8a, 8b se joignant par un plan de joint axial 38. Chaque demi-palier 8a, 8b est formé d'une pièce moulée en matière synthétique. Les deux demi-paliers 8a, 8b sont associés l'un à l'autre autour de l'arbre moteur 3 par au moins un téton 39 solidaire d'un demi-palier 8a, 8b engagé dans un évidement complémentaire 40 de l'autre demi-palier 8b, 8a. La figure 4 représente un demi-palier 8a ou 8b. Les deux demi-paliers 8a, 8b sont identiques et comportent d'un côté de l'axe 19 une série de tétons 39 (trois tétons dans l'exemple représenté) et, de l'autre côté de l'axe 19, une série d'évidements complémentaires 40 (trois évidements dans l'exemple représenté) venant en regard des tétons 39 de l'autre demi-palier 8b, 8a. Les tétons 39 s'étendent perpendiculairement au plan de joint 38 et ont une forme et des dimensions correspondant à celles des évidements 40 qui sont ménagés perpendiculairement au plan de joint 38. Avantageusement, les tétons 39 comportent une tête d'extrémité de plus grand diamètre, tronconique et formant un épaulement anti-retour. Les évidements 40 peuvent également comporter un épaulement interne anti-retour. Dès lors, lorsque les deux demi-paliers 8a, 8b sont associés l'un à l'autre en engageant les tétons 39 de l'un des demi-paliers dans les évidements 40 de l'autre demi-palier, leur démontage ultérieur n'est plus possible, sauf à casser les tétons 39 et/ou les évidements 40.

Il est à noter que les deux demi-paliers 8a, 8b étant strictement identiques, leur fabrication est extrêmement peu coûteuse puisqu'elle peut être réalisée par exemple par injection à l'aide d'un seul moule.

Le palier 8 comporte en outre des pièges à graisse 41, 42 constitués de renfoncements ménagés dans sa surface interne 36 au contact de l'arbre moteur 3. Ces pièges à graisse comportent des renfoncements en forme de gorge circulaire périphérique 41, et de part et d'autre de ces renfoncements circulaires 41, des trous borgnes 42 régulièrement répartis.

Pour monter l'essieu 1 selon l'invention, on procède de la façon suivante :

On dispose tout d'abord de la graisse dans les pièges à graisse 41, 42 de chacun des demi-paliers 8a, 8b. On assemble ensuite les deux demi-paliers 8a, 8b l'un sur l'autre en engageant les tétons 39 dans les évidements 40 (figure 5) pour former le palier 8. On engage ensuite l'arbre moteur 3 à travers les lumières 27 des flasques 10, de chaque côté. Pour permettre cet engagement, les paliers 8 n'étant pas en place, on peut incliner légèrement l'arbre 3 par rapport à l'axe de la première lumière 27 dans laquelle on introduit une première extrémité 12 de l'arbre 3.

On engage ensuite les deux paliers 8 préalablement assemblés autour des extrémités de l'arbre 3 à travers les lumières 27 des flasques 10 jusqu'à ce que les collets 29 viennent au contact de la face extérieure 30 des flasques 10. On place ensuite les circlips 31 bloquant axialement l'arbre moteur 3. On monte ensuite les roues libres et les pignons 13 d'entraînement aux extrémités libres de l'arbre moteur 3. Chaque roue motrice 2 est ensuite montée autour de son axe 11. Le palier 8 est ensuite placé à l'intérieur des évidements 22 de la paroi 9 du carter, puis les plaques 23 sont serrées grâce aux vis 24, ce qui termine l'assemblage.

Le démontage des paliers 8 et de l'arbre moteur 3 est effectué en inversant ces opérations. Il est à noter cependant que l'on peut remplacer uniquement le palier 8 si nécessaire. Pour ce faire, il suffit en effet de démonter les pignons 13 et la roue libre, de desserrer les vis 24 serrant la plaque 23 contre le palier 8, puis de chasser chaque palier 8 défectueux vers l'extérieur en l'extrayant de la lumière 27 du flasque 10 après avoir ôté le circlips 31 correspondant. Pour le montage d'un palier 8 neuf, on effectue ces opérations en sens inverse.

Un palier 8 selon l'invention peut également être fabriqué en métal, par exemple en bronze ou en matériau équivalent. Dans une autre variante également, la surface interne 36 du palier 8 peut être formée d'un revêtement de matériau anti-friction tel que du bronze, du téflon ou équivalent, à la façon d'un coussinet. Lorsque le palier 8 est formé de métal, il peut être constitué d'une seule pièce ou également en deux demi-paliers 8a, 8b de façon similaire à l'exemple représenté sur la figure 4. Néanmoins, dans ce dernier cas, les tétons 39 sont de préférence cylindriques, ainsi que les évidements complémentaires 40.

Bien que le palier 8 selon l'invention ne comporte pas de roulement à billes, des essais comparatifs ont démontré qu'il présente une durée de vie parfaitement satisfaisante. Pour ce faire, on a soumis un essieu conforme à l'invention à des cycles de rotation sous fortes vibrations. Et on a constaté que la longévité des paliers 8 est équivalente à celle des paliers antérieurs a roulement à billes. En pratique, on explique ce résultat au fait que l'efficacité d'un roulement à billes suppose un montage extrêmement précis impossible à réaliser en pratique dans les machines de l'art antérieur, compte-tenu des faibles tolérances requises pour la fabrication des autres éléments de la machine, notamment du carter.

## Revendications

1. Essieu d'entraînement et de réglage en hauteur des roues motrices (2) d'une machine roulante autotractée à conducteur marchant telle qu'une tondeuse à gazon, comprenant un arbre moteur (3) entraîné en rotation et, pour le montage de chaque roue (2) motrice, un palier (8) porté par une paroi latérale (9) de carter de la machine et traversé par l'arbre moteur (3) qu'il supporte, un flasque (10) de support de la roue (2) porté par le palier (8) et portant un axe (11) sur lequel la roue (2) est montée librement rotative, l'extrémité libre (12) de l'arbre moteur (3) s'étendant hors du palier (8) pour être accouplée en rotation à un pignon (13) d'entraînement de la roue (2), caractérisé en ce que le flasque (10) de support comporte une lumière (27) traversante pour recevoir le palier (8), en ce que la section droite transversale du palier (8) dans sa portion s'étendant entre la lumière (27) du flasque (10) de support et son extrémité libre (33) engagée à l'intérieur de la paroi (9) du carter a des dimensions hors tout perpendiculairement à l'axe (19) du palier qui sont inférieures ou égales à celles de la section droite transversale de la lumière (27) du flasque (10) de support, et en ce que le flasque (10) de support est monté sur le palier (8) par des moyens d'association adaptés pour permettre le démontage ultérieur du palier (8), de sorte que le palier (8) peut être monté en l'introduisant à travers la lumière (27) du flasque (10) de support ou démonté par extraction axiale hors de la lumière (27) du flasque (10) de support.

2. Essieu selon la revendication 1, caractérisé en ce que le palier (8) est un palier lisse en forme générale de manchon et est monté fixe par rapport à une paroi (9) du carter, et en ce que le palier (8) définit une portée interne (36) globalement cylindrique de révolution de guidage et de support de l'arbre moteur rotatif (3), et une portée externe (26) cylindrique de révolution de guidage et de support du flasque (10) de support de la roue (2) motrice correspondante.

3. Essieu selon l'une des revendications 1 et 2, caractérisé en ce que le palier (8) est formé de deux demi-paliers (8a, 8b) se joignant par un plan de joint axial (38).

4. Essieu selon la revendication 3, caractérisé en ce que les deux demi-paliers (8a, 8b) sont associés l'un à l'autre autour de l'arbre moteur (3) par au moins un téton (39) solidaire d'un demi-palier (8a, 8b) engagé dans un évidement complémentaire (40) de l'autre demi-palier (8b, 8a).

5. Essieu selon la revendication 4, caractérisé en ce que les deux demi-paliers (8a, 8b) sont identiques et comportent d'un côté de l'axe (19) une série de tétons (39) et de l'autre côté de l'axe (19) une série d'évidements complémentaires (40).

6. Essieu selon l'une des revendications 1 à 5, caractérisé en ce que le palier (8) comporte des pièges à graisse (41, 42) constitués de renfoncements ménagés dans sa surface interne (36) au contact de l'arbre moteur (3).

7. Essieu selon l'une des revendications 1 à 6, caractérisé en ce que la lumière (27) du flasque (10) est cylindrique, et en ce que la surface externe du palier (8) définit une portée cylindrique (26) introduite dans la lumière (27), les dimensions radiales de la lumière (27) étant similaires de celles de la portée (26) pour permettre un guidage en rotation du flasque (10) par rapport au palier (8).

8. Essieu selon l'une des revendications 1 à 7, caractérisé en ce que la lumière (27) du flasque (10) de support est une lumière (27) emboutie axialement à travers le flasque (10) de support vers l'intérieur du carter.

9. Essieu selon l'une des revendications 1 à 8, caractérisé en ce que le palier (8) est constitué d'un canon (20) introduit à travers le flasque (10) et la paroi (9) du carter et formant une portée externe (21) engagée dans un évidement (22) de la paroi (9) du carter, et une portée cylindrique externe (26) engagée et guidée en rotation dans la lumière (27) traversante cylindrique du flasque (10), et d'un collet extérieur (29) venant en butée contre la face extérieure (30) du flasque (10) afin de bloquer axialement le palier (8) vers l'intérieur du carter par rapport au flasque (10) et à la paroi (9) du carter.

10. Essieu selon l'une des revendications 1 à 9, caractérisé en ce qu'il comporte des moyens (31) de blocage axial de l'arbre moteur (3) immédiatement à l'extérieur du palier (8).

11. Essieu selon l'une des revendications 1 à 10, caractérisé en ce que le palier (8) est constitué d'une matière synthétique dure et rigide.

12. Machine roulante autotractée à conducteur marchant -notamment tondeuse à gazon-, caractérisée en ce qu'elle comporte au moins un essieu selon l'une des revendications 1 à 11.

## Claims

1. Axle for driving and adjusting the height of drive wheels (2) of a self-propelled mobile machine operated by a pedestrian such as a lawn-mower, comprising a drive shaft (3) driven in rotation and, for mounting each drive wheel (2), a bearing (8) supported by a side wall (9) of the machine casing, the drive shaft (3) passing through said bearing which supports said drive shaft, a side plate (10) supporting the wheel (2), said side plate being carried by the bearing (8) and carrying a spindle (11) on which the wheel (2) is mounted in freely rotatable manner, whereby the free end (12) of the drive shaft (3) extends beyond the bearing (8) with a view to being coupled in rotation to a pinion (13) for driving the wheel (2), characterised in that the supporting side plate (10) comprises a through aperture (27) for accommodating the bearing (8), in that, in its part extending between the aperture (27) of the supporting side pate (10) and its free end (33) engaged within the casing wall (9), the normal cross-section of the bearing (8) has, perpendicular to the spindle (19) of the bearing, overall dimensions smaller than or equal to those of the normal cross-section of the aperture (27) of the supporting side plate (10), and in that the supporting side plate (10) is mounted on the bearing (8) with the aid of connecting means so designed as to enable subsequent dismantling of the bearing (8) so that the bearing (8) can be fitted by inserting it through the aperture (27) of the supporting side plate (10) or dismantled by axial withdrawal from the aperture (27) of the supporting side plate (10).

2. Axle according to Claim 1, characterised in that the bearing (8) is a slide bearing having the general shape of a sleeve and is immovably mounted in relation to a casing wall (9) and in that the bearing (8) defines an internal support face (36) overall constituting a cylinder of revolution for guiding and supporting the rotating drive shaft (3) and an external support face (26) overall constituting a cylinder of revolution for guiding and supporting the side plate (10) supporting the corresponding drive wheel (2).

3. Axle according to one of Claims 1 and 2, characterised in that the bearing (8) is constituted by two half-bearings (8a, 8b) connected to one another by an axial connecting plane (38).

4. Axle according to Claim 3, characterised in that the two half-bearings (8a, 8b) are connected with one another about the drive shaft (3) by means of at least one lug (39) firmly secured to one half-bearing (8a, 8b), said lug being engaged within a complementary recess (40) in the other half-bearing (8b, 8a).

5. Axle according to Claim 4, characterised in that the two half-bearings (8a, 8b) are identical and comprise on one side of the spindle (19) a series of lugs (39) and on the other side of the spindle (19) a series of complementary recesses (40).

6. Axle according to one of Claims 1 to 5, characterised in that the bearing (8) comprises grease traps (41, 42) constituted by reinforcements provided in its internal surface (36) in contact with the drive shaft (3).

7. Axle according to one of Claims 1 to 6, characterised in that the aperture (27) of the side plate (10) is cylindrical and in that the external surface of the bearing (8) defines a cylindrical support face (26) inserted into the aperture (27), the radial dimensions of the aperture (27) being similar to those of the support face (26) so as to enable the side plate (10) to be guided in rotation relative to the bearing (8).

8. Axle according to one of Claims 1 to 7, characterised in that the aperture (27) of the supporting side plate (10) is an aperture (27) pressed axially through the supporting side plate (10) towards the inside of the casing.

9. Axle according to one of Claims 1 to 8, characterised in that the bearing (8) is constituted by a tube (20) inserted through the side plate (10) and the casing wall (9) and forming an external support face (21) engaged within a recess (22) of the casing wall (9) and an external cylindrical support face (26) engaged and guided in rotation within the cylindrical through aperture (27) in the side plate (10) and an external collar (29) abutting the external face (30) of the side plate (10) so as to block the bearing (8) axially in the direction of the casing, relative to the side wall (10) and the casing wall (9).

10. Axle according to one of Claims 1 to 9, characterised in that it comprises means (31) for axial blocking of the drive shaft (3) directly outside the bearing (8).

11. Axle according to one of Claims 1 to 10, characterised in that the bearing (8) is constituted by a hard and rigid synthetic material.

12. Self-propelled mobile machine operated by a pedestrian - in particular a lawn-mower - characterised in that it comprises at least one axle according to one of Claims 1 to 11.

## Patentansprüche

1. Achse zum Antrieb und zur Höheneinstellung der Antriebsrädern (2) einer fahrbaren, durch eine gehende Person gesteuerten Maschine mit Eigenantrieb wie eines Rasenmähers, umfassend eine rotierend angetriebene Antriebswelle (3) und zur Anbringung jedes Antriebsrades (2) ein durch eine Seitenwand (9) des Maschinengehäuses abgestütztes Lager (8), wobei die Antriebswelle (3) durch das sie abstützende Lager (8) verläuft, eine Seitenplatte (10) zum Abstützen des Rades (2), die an dem Lager (8) angeordnet ist und eine Spindel (11) trägt, an der das Rad (2) frei drehbar angebracht ist, während sich das freie Ende (12) der Antriebswelle (3) zwecks rotierender Kupplung mit einem Ritzel (13) zum Antreiben des Rades (2) über das Lager (8) hinaus erstreckt, dadurch gekennzeichnet, daß die Abstützseitenplatte (10) zur Aufnahme des Lagers (8) eine durchgehende Öffnung (27) umfaßt, daß der normale Querschnitt des Lagers (8) in dessen sich zwischen der Öffnung (27) der Abstützseitenplatte (10) und seinem in das Innere der Gehäusewand (9) eingreifenden freien Ende (33) erstreckende Bereich senkrecht zu der Lagerspindel (19) Gesamtmaße aufweist, die geringer sind als oder gleich groß wie die des normalen Querschnitts der Öffnung (27) der Abstützseitenplatte (10), und daß die Abstützseitenplatte (10) an dem Lager (8) mit Hilfe von Befestigungsmitteln angebracht ist, die so beschaffen sind, daß sie späteres Abmontieren des Lagers (8) gestatten, so daß das Lager (8) angebracht werden kann, indem man es durch die Öffnung (27) der Abstützseitenplatte (10) hindurch einführt, bzw. daß das besagte Lager abmontiert werden kann, indem man es in Axialrichtung aus der Öffnung (27) der Abstützseitenplatte (10) zieht.

2. Achse nach Anspruch 1, dadurch gekennzeichnet, daß das Lager (8) ein Gleitlager buchsenartiger Allgemeinform ist und im Verhältnis zu einer Gehäusewand (9) feststehend angeordnet ist, und daß das Lager (8) eine innere allgemein rotationszylindrische Auflagefläche (36) zur Führung und Abstützung der rotierenden Antriebswelle (3) sowie eine äußere rotationszylindrische Auflagefläche (26) zur Führung und Abstützung der Seitenplatte (10) zum Abstützen des entsprechenden Antriebsrades (2) abgrenzt.

3. Achse nach einem der Ansprüche 1 und 2, dadurch gekennzeichnet, daß sich das Lager (8) aus zwei Halblagern (8a, 8b) zusammensetzt, die durch eine axiale Verbindungsebene (38) miteinander verbunden sind.

4. Achse nach Anspruch 3, dadurch gekennzeichnet, daß die beiden Halblager (8a, 8b) miteinander rings um die Antriebswelle (3) mit Hilfe von wenigstens einem Zapfen (39) verbunden sind, der fest an einem Halblager (8a, 8b) angeordnet ist und in eine komplementäre Aussparung (40) des anderen Halblagers (8b, 8a) eingreift.

5. Achse nach Anspruch 4, dadurch gekennzeichnet, daß die beiden Halblager (8a, 8b) identisch sind und an einer Seite der Spindel (19) eine Reihe von Zapfen (39) und an der anderen Seite der Spindel (19) eine Reihe von komplementären Aussparungen (40) umfassen.

6. Achse nach einem der Ansprüche 1 bis 5, dadurch gekennzeichnet, daß das Lager (8) Fettfänger (41, 42) umfaßt, die durch in dessen mit der Antriebswelle (3) in Kontakt befindlichen inneren Oberfläche (36) vorgesehene Verstärkungen gebildet sind.

7. Achse nach einem der Ansprüche 1 bis 6, dadurch gekennzeichnet, daß die Öffnung (27) der Seitenplatte (10) zylindrisch ist, sowie dadurch, daß die äußere Oberfläche des Lagers (8) eine in die Öffnung (27) eingeführte zylindrische Auflagefläche (26) abgrenzt, wobei die radialen Maße der Öffnung (27) denen der Auflagefläche (26) ähnlich sind, so daß sie rotierende Führung der Seitenplatte (10) im Verhältnis zu dem Lager (8) gestatten.

8. Achse nach einem der Ansprüche 1 bis 7, dadurch gekennzeichnet, daß die Öffnung (27) der Abstützseitenplatte (10) eine axial durch die Abstützseitenplatte (10) hindurch auf das Innere des Gehäuses zu gepreßte Öffnung (27) ist.

9. Achse nach einem der Ansprüche 1 bis 8, dadurch gekennzeichnet, daß das Lager (8) aus einem Rohr (20), das durch die Seitenplatte (10) und die Gehäusewand (9) hindurch eingeführt ist und eine in eine Aussparung (22) der Gehäusewand (9) eingreifende äußere Auflagefläche (21) und eine äußere zylindrische Auflagefläche (26) bildet, wobei die besagte Auflagefläche (26) in die durchgehende zylindrische Öffnung (27) der Seitenplatte (10) eingreift und rotierend in dieser geführt wird, sowie aus einem äußeren Kragen (29) besteht, der an die äußere Fläche (30) der Seitenplatte (10) angrenzt, so daß er das Lager (8) im Verhältnis zu der Seitenplatte (10) und der Gehäusewand (9) auf das Innere des Gehäuses zu axial blockiert.

10. Achse nach einem der Ansprüche 1 bis 9, dadurch gekennzeichnet, daß sie Mittel (31) zum axialen Blockieren der Antriebswelle (3) unmittelbar außerhalb des Lagers (8) umfaßt.

11. Achse nach einem der Ansprüche 1 bis 10, dadurch gekennzeichnet, daß das Lager (8) aus einem harten und steifen synthetischen Material besteht.

12. Fahrbare, durch eine gehende Person gesteuerte Maschine mit Eigenantrieb - insbesondere ein Rasenmäher - dadurch gekennzeichnet, daß sie mindestens eine Achse nach einem der Ansprüche 1 bis 11 umfaßt.
